# EUROPÄISCHE PATENTSCHRIFT

(11) **EP 1 879 277 B1**
(45) Veröffentlichungstag und Bekanntmachung des Hinweises auf die Patenterteilung: **09.11.2011**
(21) Anmeldenummer: 07012880.6
(22) Anmeldetag: 30.06.2007
(51) Int. Cl.: H02J 3/38

(54) **Windpark sowie Verfahren zum Betreiben eines Windparks**
Wind farm and method for operating a wind farm
Ferme à vent tout comme procédé destiné au fonctionnement d'une ferme à vent

(30) Priorität: 13.07.2006 DE 102006032389
(43) Veröffentlichungstag der Anmeldung: 16.01.2008
(73) Patentinhaber: NORDEX Energy GmbH, 22848 Norderstedt (DE)
(72) Erfinder: Jurkat, Mark, 22844 Norderstedt (DE); Hester, Robert, 22305 Hamburg (DE)
(74) Vertreter: Schildberg, Peter

(56) Entgegenhaltungen:
- EP-A1- 1 571 746
- EP-A2- 1 672 778
- US-A1- 2002 029 097

## Beschreibung

Die vorliegende Erfindung betrifft einen Windpark sowie ein Verfahren zum Betreiben eines Windparks. Der Windpark besitzt eine Vielzahl von Windenergieanlagen, die jeweils eine Anlagensteuerung aufweisen. Die Anlagensteuerung ist in der Lage, bei ausreichend Wind die von der Windenergieanlage zu erzeugende Wirkleistung vorzugeben. Hierzu wird der Anlagensteuerung der Windenergieanlage ein Sollwert vorgegeben. Die Anlagensteuerung kann auch als eine Regelung ausgebildet sein, so daß der Ist-Wert der von der Windenergieanlage erzeugten Wirkleistung auf den Sollwert eingeregelt werden kann. Ferner ist der Windpark mit einer Parksteuerung ausgestattet, die jeweils der Anlagensteuerung einen Sollwert für die Wirkleistung vorgibt.

Aus WO 01/25630 A1 ist ein Windpark bekannt, dessen Nennleistung größer ist als die Leistung, die in das Energieversorgungsnetz, an welches der Windpark angeschlossen ist, eingespeist werden kann und/oder eingespeist werden darf. Um die eingespeiste Leistung auf den maximalen Wert zu begrenzen, wird vorgeschlagen, die eingespeiste Leistung aller Windenergieanlagen des Windparks zu begrenzen.

Aus WO 03/030329 A1 ist ein Windpark bekannt, dessen in das Energieversorgungsnetz abgegebene Wirkleistung von einem Netzbetreiber vorgegeben werden kann. Die Steuerung des Windparks drosselt entsprechend der Vorgaben die Leistung für die Windenergieanlagen, wobei deren Leistung gleich oder jeweils unterschiedlich gedrosselt werden kann.

Aus GB 2 330 256 A ist eine Windenergieanlage bekannt, bei der im Anschlußpunkt der Windenergieanlage an das Netz die Spannung gemessen und die maximal mögliche einzuspeisende Leistung errechnet wird. Insbesondere bei relativ schwachen Netzanschlüssen ist eine Überspannung durch die von der Windenergieanlage in das Netz eingespeiste Leistung zu vermeiden.

Aus EP 1 467 463 A1 ist ein Windpark bekannt, der eine Parksteuerung besitzt. Die vom Windpark in das Netz eingespeiste Wirkleistung wird abhängig von der am Netzanschlußpunkt gemessenen Frequenz eingestellt. Dieser Steuerung/Regelung für den Windpark liegt zugrunde, daß wenn in einem Netz mehr Leistung erzeugt als verbraucht wird, die Frequenz steigt, und wenn mehr Leistung verbraucht als erzeugt wird, die Frequenz dann fällt.

Aus EP 1 571 746 A1 ist ein Verfahren zur Regelung der Wirkleistung in einem Windpark bekannt. Das Verfahren sieht vor, daß ein Sollwert für die Wirkleistung der Parksteuerung manuell oder dynamisch vorgegeben werden kann. In dem Fall, in dem der Istwert der Leistung den Sollwert überschreitet, sind zwei Verfahren vorgesehen, um die Überleistung des Windparks zu reduzieren. Bei dem ersten Ansatz wird für ausgewählte Windenergieanlagen die Leistung auf einen Maximalwert hochgefahren und die verbleibenden anderen Anlagen heruntergefahren. In einem alternativen Ansatz werden eine oder mehrere Windenergieanlagen heruntergefahren und die Feinanpassung der Leistung durch die verbleibenden Anlagen ausgeführt.

Aus US 2002/0029097 A1 ist eine Windparksteuerung mit einer überwachenden Steuerung und Datensammlung (Scada = Supervisor command and data acqusition) bekannt. Das Scada-System ist ausgelegt um von jeder Windenergieanlage Daten zu sammeln und über eine Schnittstelle die Windenergieanlage zu steuern und mit anderen Teilen des Systems zu kommunizieren. Eine sogenannte Feldbearbeitungseinheit (APU = Area Processing Unit) ist ausgelegt, um für einen Benutzer über eine Schnittstelle die Windenergieanlage im Hinblick auf Grenzwerte und ihre Sicherheit hin zu steuern. Dies schließt ebenfalls eine Begrenzung der Leistungsabgabe ein oder Leistungsgrenzen einzustellen, durch die eine geeignete Anzahl von Windenergieanlagen herunterfährt.

Es ist bekannt, daß unter bestimmten Netzbedingungen und/oder bei Auftreten von bestimmten Netzfehlern es vorkommen kann, daß die von einem Windpark in das Netz eingespeiste Leistung innerhalb einer kurzen Zeitspanne zu begrenzen und auf dem begrenzten Wert stabil zu halten ist. Üblicherweise wird das Signal, das diesen Vorgang im Windpark auslöst, durch den Netzbetreiber vorgegeben. Die Zeitdauer, innerhalb der die Wirkleistung heruntergefahren werden muß, beträgt beispielsweise weniger als 4 Sekunden.

Der Erfindung liegt die Aufgabe zugrunde, einen Windpark sowie ein Verfahren zu dessen Betrieb bereitstellen, das es mit einfachen Mitteln erlaubt, innerhalb einer kurzen Zeitspanne die in das elektrische Netz eingespeiste Wirkleistung zu begrenzen, ohne die Möglichkeiten zur Regelung des Windparks einzuschränken.

Erfindungsgemäß wird die Aufgabe durch einen Windpark mit den Merkmalen aus Anspruch 1 und ein Verfahren zum Betreiben eines Windpark mit den Merkmalen aus Anspruch 10 gelöst.

Der erfindungsgemäße Windpark besitzt eine Vielzahl von Windenergieanlagen, die jeweils eine Anlagensteuerung aufweisen. Die Anlagensteuerung gibt für die zugehörige Windenergieanlage den Wert an zu generierender Wirkleistung vor. Die Parksteuerung gibt einen Sollwert für die insgesamt ins Netz einzuspeisende Wirkleistung vor. Erfindungsgemäß begrenzt die Parksteuerung die von dem Windpark in das elektrische Versorgungsnetz eingespeiste Wirkleistung auf einen vorgegebenen Wert. Sowohl die Größe des vorgegebenen Werts als auch die Zeitdauer kann entweder von der Parksteuerung selbst ermittelt oder der Parksteuerung von dem Energieversorgungsuntemehmen vorgegeben werden. Auch ist es möglich, daß die Zeitdauer für den vorgegebenen Wert nicht vorab bestimmt wird, sondern sich durch spätere Signale an die Parksteuerung ergibt. Um eine schnelle Begrenzung der eingespeisten Wirkleistung zu erzielen, teilt die Parksteuerung die Windenergieanlagen des Windparks in eine erste und in eine zweite Gruppe ein. Die Windenergieanlagen der ersten Gruppe werden abgeschaltet. Den Windenergieanlagen der zweiten Gruppe wird jeweils ein Sollwert für deren Wirkleistung vorgegeben. Mit der Parksteuerung wird ausgenutzt, daß eine Abschaltung der Windenergieanlagen, beispielsweise eine Schnellabschaltung oder ein Notstop, deutlich schneller funktioniert als das Einregeln der Windenergieanlagen auf einen niedrigeren Sollwert. Erfindungsgemäß ist vorgesehen, daß die Parksteuerung die Windenergieanlagen der ersten Gruppe wieder startet, sobald die Summe der Ist-Werte der Wirkleistung der Windenergieanlagen der zweiten Gruppe den vorgegebenen Sollwert erreicht hat. Bevorzugt leitet die Parksteuerung das Wiederhochfahren und/oder das Wiedereinkoppeln der Windenergieanlagen ein, wenn ein stationärer Wert für den Ist-Wert erreicht wurde, der ungefähr dem Sollwert entspricht. Alternativ oder zusätzlich kann das Wiederhochfahren und/oder Wiedereinkoppeln nach einer vorbestimmten Zeitdauer eingeleitet werden. Dieser Verfahrensschritt bewirkt, daß nach einem schnellen Reduzieren der Wirkleistung durch das Abschalten der Windenergieanlagen der ersten Gruppe diese wieder gestartet und ans Netz geschaltet werden. Durch das baldige Wiederhochfahren und/oder Zuschalten der Windenergieanlagen der ersten Gruppe wird sichergestellt, daß die Leistung des gesamten Windparks auch nach einer Leistungsbegrenzung schnell wieder im vollen Umfang, d.h. mit sämtlichen Windenergieanlagen geregelt werden kann.

Weiterhin wird der Sollwert der Wirkleistung jeder einzelnen Windenergieanlage reduziert, wodurch sich der Abstand zu der durch die Windgeschwindigkeit beeinflußten, maximal möglichen Wirkleistung erhöht. Dies garantiert auch bei sinkender Windgeschwindigkeit eine längere konstante Wirkleistungsproduktion, welche einerseits den Ertrag steigert und andererseits durch die konstante Wirkleistungsproduktion zur Netzstabilität beiträgt.

In einer bevorzugten Ausgestaltung ist die Parksteuerung derart ausgebildet, daß die zweite Gruppe, also die Gruppe von Windenergieanlagen, die weiterbetrieben wird, derart ausgewählt ist, daß der Ist-Wert der insgesamt von der zweiten Gruppe eingespeisten Wirkleistung kleiner oder gleich dem vorgegebenen Wert für die Wirkleistung ist. Durch die Auswahl der zweiten Gruppe wird sichergestellt, daß der vorgegebene Leistungswert, auf den reduziert werden soll, nicht oder nur geringfügig überschritten wird. Ferner stellt die Parksteuerung in der bevorzugten Ausgestaltung sicher, daß die Anzahl der Windenergieanlagen in der ersten Gruppe so klein wie möglich ist. Es wird also bei dem erfindungsgemäßen Verfahren sichergestellt, daß nur so viele Anlagen abgeschaltet werden wie notwendig. Hierdurch wird erreicht, daß der Ist-Wert der eingespeisten Leistung nach Abschaltung einzelner Windenergieanlagen nicht unnötig klein ist, sondern nach Möglichkeit lediglich geringfügig von dem vorgegebenen Wert für die eingespeiste Leistung abweicht.

In einer weiteren bevorzugten Ausgestaltung wählt die Parksteuerung die Windenergieanlagen der zweiten Gruppe derart aus, daß die Summe der Ist-Werte der Wirkleistung dieser Windenergieanlagen ungefähr dem vorgegebenen Wert der Leistung entspricht. Hierdurch wird sichergestellt, daß bei den Windenergieanlagen der zweiten Gruppe lediglich ein geringer Regeleingriff erfolgen muß. Hierdurch kann auch sichergestellt werden, daß bei ungünstigen Netzbedingungen die Windenergieanlagen weiterbetrieben werden und so mindestens für die vorgegebene Zeitdauer die Wirkleistung zur Stützung des Netzes eingespeist werden kann.

In einer bevorzugten Ausgestaltung sind die Anlagensteuerungen der einzelnen Windenergieanlagen über eine bidirektionale Datenleitung mit der Parksteuerung verbunden. Über die Datenleitung können beispielsweise Daten zu dem Zustand der Windenergieanlage an die Parksteuerung weitergeleitet werden. Diese Daten, die beispielsweise den aktuellen Ist-Wert der erzeugten Wirkleistung, aber auch andere Aspekte betreffen, können von der Parksteuerung bei der Einteilung in die erste und/oder zweite Gruppe mitberücksichtigt werden.

In einer bevorzugten Ausgestaltung empfängt die Parksteuerung Befehle zu dem Sollwert der einzuspeisenden Wirkleistung. Dies bedeutet, daß der Netzbetreiber die Möglichkeit besitzt, über eine zentrale Steuerung des Netzbetreibers die einzuspeisende Wirkleistung und die Zeitdauer für den Windpark vorzugeben.

In einer zweckmäßigen Ausgestaltung ist die Parksteuerung als eine Regelung ausgebildet, die mit einer Meßeinrichtung versehen ist. Die Meßeinrichtung mißt die ins Netz eingespeiste Wirkleistung, so daß die Parksteuerung den Ist-Wert entsprechend regeln kann.

In einer bevorzugten Ausgestaltung gibt die Parksteuerung den Windenergieanlagen der zweiten Gruppe jeweils den gleichen Sollwert vor. Beispielsweise können in dieser Ausgestaltung dann die Windenergieanlagen der zweiten Gruppe so ausgewählt sein, daß sie bereits nah an dem vorgegebenen Wert für die Leistung liegen.

Die erfindungsgemäße Aufgabe wird ebenfalls durch ein Verfahren zur Steuerung eines Windparks gelöst. Der Windpark weist eine Vielzahl von Windenergieanlagen auf, deren Anlagensteuerungen jeweils einen Sollwert für die Wirkleistung der Windenergieanlagen vorgeben. Die erfindungsgemäße Parksteuerung begrenzt für eine vorgegebene Zeitdauer die von dem Windpark in das Netz eingespeiste Wirkleistung auf einen vorgegebenen Wert. Hierzu schaltet die Parksteuerung eine erste Gruppe von Windenergieanlagen ab und gibt einer zweiten Gruppe von Windenergieanlagen jeweils einen entsprechenden Sollwert für die Wirkleistung vor. Das erfindungsgemäße Verfahren erlaubt es daher sehr schnell, die vom Windpark eingespeiste Leistung zu begrenzen, da das Abschalten der Windenergieanlage, beispielsweise durch einen Schnellstop, deutlich weniger Zeit in Anspruch nimmt als ein Herunterfahren der Wirkleistung. Erfindungsgemäßen ist vorgesehen, daß die Parksteuerung die Windenergieanlagen der ersten Gruppe wieder startet, sobald die Summe der Ist-Werte der Wirkleistung der Windenergieanlagen der zweiten Gruppe den vorgegebenen Sollwert erreicht hat. Bevorzugt leitet die Parksteuerung das Wiederhochfahren und/oder das Wiedereinkoppeln der Windenergieanlagen ein, wenn ein stationärer Wert für den Ist-Wert erreicht wurde, der ungefähr dem Sollwert entspricht. Dieser Verfahrensschritt bewirkt, daß nach einem schnellen Reduzieren der Wirkleistung durch das Abschalten der Windenergieanlagen der ersten Gruppe diese wieder gestartet und ans Netz geschaltet werden.

Bei dem erfindungsgemäßen Verfahren wählt die Parksteuerung die zweite Gruppe von Windenergieanlagen derart aus, daß der Ist-Wert der insgesamt von den Windenergieanlagen der zweiten Gruppe eingespeisten Wirkleistung kleiner als der vorgegebene Wert für die Leistung ist und die Anzahl der Windenergieanlagen in der ersten Gruppe so klein wie möglich ist. Das erfindungsgemäße Verfahren stellt sicher, daß nur so viele Windenergieanlagen abgeschaltet werden wie notwendig ist. Zugleich wählt die Parksteuerung bei dem erfindungsgemäßen Verfahren die Windenergieanlagen der zweiten Gruppe, also die Windenergieanlagen, die weiterbetrieben werden, derart aus, daß der insgesamt von diesen Windenergieanlagen erzeugte Leistungswert kleiner oder gleich dem vorgegebenen Wert für die Leistung ist. Der von der Windenergieanlage bereitgestellte Leistungswert liegt somit so nah wie möglich an dem vorgegebenen Wert.

Erfindungsgemäß wird nach einem Wiedereinkoppeln der Windenergieanlagen der ersten Gruppe, die Summe der Wirkleistung der wieder eingekoppelten Windenergieanlagen erhöht und die Summe der Wirkleistung der noch am Netz befindlichen Windenergieanlagen reduziert derart, daß die Summe der Wirkleistung beider Gruppen den vorgegebenen Wert nicht überschreitet. Hierdurch wird sichergestellt, daß nach einer schnellen Wirkleistungsbegrenzung die erste Gruppe wieder zugeschaltet wird, um eine möglichst große Anzahl von Stellgliedern für weitere Begrenzung zur Verfügung zu haben.

In einer ebenfalls bevorzugten Ausgestaltung wählt die Parksteuerung die Windenergieanlagen der zweiten Gruppe derart aus, daß der Ist-Wert der Leistung dieser Windenergieanlage ungefähr dem vorgegebenen Wert der Leistung entspricht. Mit diesem Verfahrensschritt betrachtet die Parksteuerung unterschiedliche Kombinationen von Windenergieanlagen und vergleicht die insgesamt von diesen Windenergieanlagen jeweils bereitgestellte Leistung mit dem vorgegebenen Leistungswert.

In einer bevorzugten Weiterführung des erfindungsgemäßen Verfahrens melden die Anlagensteuerungen der einzelnen Windenergieanlagen jeweils ihren Betriebsmodus und/oder den Ist-Wert der eingespeisten Leistung an die Parksteuerung.

In einer bevorzugten Ausgestaltung empfängt die Parksteuerung einen Befehl zur Begrenzung der eingespeisten Leistung. Dieser Befehl kann beispielsweise von einem Energieversorgungsuntemehmen abgesetzt werden.

In einer bevorzugten Ausgestaltung ist die Parksteuerung mit einer Meßeinrichtung versehen, um den Ist-Wert der von dem Windpark eingespeisten Wirkleistung zu messen. Die Parksteuerung regelt den Ist-Wert der Wirkleistung auf den vorgegebenen Leistungswert. Die Ausgestaltung der Parksteuerung als Regelung erlaubt es, den vorgegebenen Leistungswert genauer einzuhalten.

In einer bevorzugten Ausgestaltung gibt die Parksteuerung den Windenergieanlagen der zweiten Gruppe jeweils den gleichen Sollwert vor. In einer ebenfalls bevorzugten Ausgestaltung des Verfahrens begrenzt die Parksteuerung den vorgegebenen Wert für die Wirkleistung jeweils für eine vorgegebene Zeitdauer. Der Windpark kehrt nachfolgend dann beispielsweise in seinen nicht gedrosselten Betrieb zurück, in dem dann beispielsweise die maximale Wirkleistung eingespeist wird.

Die Erfindung wird nachfolgend anhand einer Figur näher erläutert.

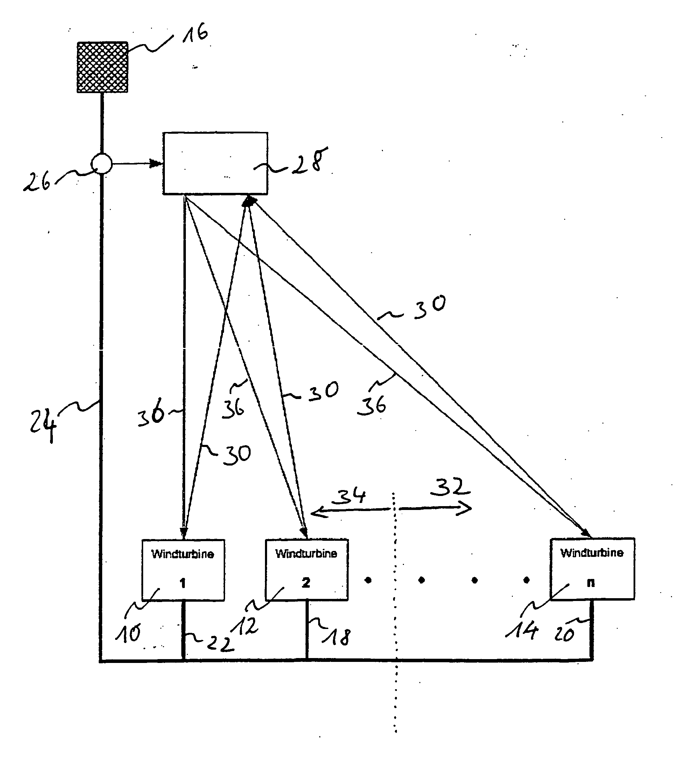

Die einzige Figur zeigt eine schematische Ansicht eines Windparks mit einzelnen Windenergieanlagen 10, 12, 14. In der Figur sind beispielhaft drei Windenergieanlagen eingezeichnet. Jede der Windenergieanlagen 10, 12, 14 besitzt eine Anlagensteuerung, über die die von der Windenergieanlage erzeugte elektrische Leistung eingestellt wird. Je nach Bauart der Windenergieanlage können hierfür unterschiedliche Komponenten, wie beispielsweise Anstellwinkel der Rotorblätter, Ansteuerung des Generators und des Umrichters und dergleichen, dienen.

Die von den einzelnen Windenergieanlagen 10, 12, 14 erzeugte Leistung wird im Windpark zusammengeführt und in das elektrische Netz 16 eingespeist. In der dargestellten Figur sind die Windenergieanlagen über Stichleitungen 18, 20, 22 mit einer Hauptleitung 24 verbunden, die in einen Netzanschlußpunkt 26 mündet. Für die Erfindung ist jedoch unerheblich, ob eine Hauptleitung 24 oder mehrere Leitungen in den Netzanschlußpunkt 26 münden.

Für den Windpark ist eine als Windparkregler 28 ausgebildete Parksteuerung vorgesehen. Der Windparkregler 28 erhält vom Netzanschlußpunkt 26 Meßwerte, aus denen der Ist-Wert der in das Netz 16 eingespeisten Wirkleistung ermittelt wird.

Ansprechend auf ein externes Steuersignal des Energieversorgungsuntemehmens (EVU) steuert der Windparkregler 28 die einzelnen Windenergieanlagen über Datenleitungen 36 an. Der Windparkregler 28 übermittelt über die Datenleitungen 36 an die Windenergieanlagen 10, 12, 14 entsprechende Steuersignale. In dem dargestellten Beispiel wird eine Gruppe 32 von Windenergieanlagen, also die Windenergieanlagen in der Figur rechts von der punktiert eingezeichneten Trennlinie, über ein Schnellstopsignal abgeschaltet. Beim Schnellstop der Gruppe 32 wird innerhalb von wenigen Sekunden die Abgabe von Wirkleistung durch die Windenergieanlagen unterbrochen.

Der Windparkregler 28 gibt für die übrigen Windenergieanlagen 34, die auch die Windenergieanlagen 10 und 12 umfassen, einen Sollwert für die einzuspeisende Wirkleistung vor. Die Auswahl der Gruppen 32, 34 von Windenergieanlagen erfolgt von dem Windparkregler nach dem Kriterium, daß der Ist-Wert der Wirkleistung der weiterbetriebenen Windenergieanlagen möglichst nur geringfügig kleiner oder gleich dem von dem Windparkregler vorgegebenen Maximalwert für die in das Netz 16 einzuspeisende Wirkleistung ist. Um die Gruppen 32, 34 der Windenergieanlagen auswählen zu können, melden die Windenergieanlagen 10, 12 und 14 über Datenleitungen 30 ihren Betriebsmodus an den Windparkregler 28.

Obwohl in dem dargestellten Ausführungsbeispiel die weiterbetriebenen Windenergieanlagen 10, 12 näher zum Netzanschluß 26 liegen als die Gruppe 32 der abgeschalteten Windenergieanlagen, bestehen die unterschiedlichsten Möglichkeiten für die Auswahl der Windenergieanlagen. Beispielsweise können diese auch nach ihrer Position im Windpark ausgewählt werden, wobei dann die Windenergieanlagen mit den ertragsschwächeren Positionen abgeschaltet werden. Ein weiterer Ansatz besteht darin, die Windenergieanlagen, die weiterbetrieben werden sollen, derart auszuwählen, daß es sich hierbei um Windenergieanlagen mit einem annähernd gleichen Ist-Wert der Wirkleistung handelt.

Auch ist es möglich, bei der Auswahl der abzuschaltenden Windenergieanlagen schon zu berücksichtigen, daß diese nach Erreichen eines stationären Zustands wieder hochgefahren werden sollen.

## Patentansprüche

1. Windpark mit einer Vielzahl von Windenergieanlagen (10, 12, 14), die jeweils eine Anlagensteuerung aufweisen, die ihrer Windenergieanlage einen Sollwert für die Wirkleistung vorgibt, und
mit einer Parksteuerung (28), die jeder Anlagensteuerung einen Sollwert für die zu erzeugende Wirkleistung vorgibt und die vom Windpark eingespeiste Wirkleistung auf einen vorgegebenen Wert begrenzt, indem eine erste Gruppe (32) von Windenergieanlagen (14) abgeschaltet und einer zweiten Gruppe (34) von Windenergieanlagen (10, 12) jeweils ein Sollwert für die Wirkleistung vorgegeben wird, **dadurch gekennzeichnet, daß** die Parksteuerung die Windenergieanlagen der ersten Gruppe wieder startet, sobald die Summe der Ist-Werte der Wirkleistung der Windenergieanlagen der zweiten Gruppe den vorgegebenen Sollwert erreicht hat und/oder eine vorgegebene Zeitdauer verstrichen ist, wobei nach einem Wiedereinkoppeln der Windenergieanlagen der ersten Gruppe die Summe der Wirkleistung der Windenergieanlagen der ersten Gruppe erhöht und die Summe der Wirkleistung der Windenergieanlagen der zweiten Gruppe reduziert wird derart, daß die Summe der Wirkleistung beider Gruppen den vorgegebenen Wert nicht oder nur geringfügig überschreitet.

2. Windpark nach Anspruch 1, **dadurch gekennzeichnet, daß** die Parksteuerung (28) die zweite Gruppe derart auswählt, daß der Ist-Wert der insgesamt von der zweiten Gruppe eingespeisten Wirkleistung kleiner oder gleich dem vorgegebenen Wert für die Wirkleistung ist und die Anzahl der Windenergieanlagen in der ersten Gruppe so klein wie möglich gewählt ist.

3. Windpark nach Anspruch 1 oder 2, **dadurch gekennzeichnet, daß** die Parksteuerung die Windenergieanlagen der zweiten Gruppe derart auswählt, daß die Summe der Ist-Werte der Wirkleistung dieser Windenergieanlagen ungefähr dem vorgegebenen Wert der Wirkleistung entspricht.

4. Windpark nach einem der Ansprüche 1 bis 3, **dadurch gekennzeichnet, daß** die Anlagensteuerung einer jeden Windenergieanlage mit der Parksteuerung über eine Datenleitung miteinander verbunden ist.

5. Windpark nach Anspruch 1 bis 4, **dadurch gekennzeichnet, daß** die Parksteuerung Befehle zu dem Sollwert der in das Netz einzuspeisenden Leistung empfängt.

6. Windpark nach einem der Ansprüche 1 bis 5, **dadurch gekennzeichnet, daß** die Parksteuerung eine Meßeinrichtung aufweist, die die ins Netz eingespeiste Wirkleistung mißt.

7. Windpark nach Anspruch 6, **dadurch gekennzeichnet, daß** die Parksteuerung den Wert der ins Netz eingespeisten Wirkleistung regelt.

8. Windpark nach einem der Ansprüche 1 bis 7, **dadurch gekennzeichnet, daß** die Parksteuerung den Windenergieanlagen der zweiten Gruppe jeweils den gleichen Sollwert für die Wirkleistung vorgibt.

9. Windpark nach einem der Ansprüche 1 bis 7, **dadurch gekennzeichnet, daß** die Parksteuerung für mindestens eine der Windenergieanlagen aus der zweiten Gruppe einen von den übrigen Sollwerten abweichenden Sollwert für die Wirkleistung vorgibt.

10. Verfahren zur Steuerung des Windparks, der eine Vielzahl von Windenergieanlagen aufweist, deren Anlagensteuerung jeweils einen Sollwert für die Wirkleistung der Windenergieanlage vorgibt, wobei eine Parksteuerung vorgesehen ist, die die vom Windpark eingespeiste Wirkleistung auf einen vorgegebenen Wert begrenzt, indem eine erste Gruppe von Windenergieanlagen abgeschaltet und einer zweiten Gruppe von Windenergieanlagen jeweils ein Sollwert für die Wirkleistung vorgegeben wird, **dadurch gekennzeichnet, daß** die Parksteuerung die Windenergieanlagen der ersten Gruppe wieder startet, sobald die Summe der Ist-Werte der Wirkleistung der Windenergieanlagen der zweiten Gruppe den vorgegebenen Sollwert erreicht hat, wobei nach einem Wiedereinkoppeln der Windenergieanlagen der ersten Gruppe die Summe der Wirkleistung der Windenergieanlagen der ersten Gruppe erhöht und die Summe der Wirkleistung der Windenergieanlagen der zweiten Gruppe reduziert wird derart, daß die Summe der Wirkleistung beider Gruppen den vorgegebenen Wert nicht oder nur geringfügig überschreitet.

11. Verfahren nach Anspruch 10, **dadurch gekennzeichnet, daß** die Parksteuerung die zweite Gruppe derart auswählt, daß der Ist-Wert der insgesamt von den Windenergieanlagen der zweiten Gruppe eingespeisten Wirkleistung kleiner oder gleich dem vorgegebenen Wert für die Wirkleistung ist und die Anzahl der Windenergieanlagen in der ersten Gruppe so klein wie möglich gewählt ist.

12. Verfahren nach Anspruch 10 oder 11, **dadurch gekennzeichnet, daß** die Parksteuerung die Windenergieanlagen der zweiten Gruppe derart auswählt, daß die Summe der Ist-Werte der Wirkleistung dieser Windenergieanlagen ungefähr dem vorgegebenen Wert der Wirkleistung entspricht.

13. Verfahren nach Anspruch 10 bis 12, **dadurch gekennzeichnet, daß** die Anlagensteuerungen der einzelnen Windenergieanlagen ihren Betriebsmodus und/oder ihren Ist-Wert für die eingespeiste Wirkleistung an die Parksteuerung melden.

14. Verfahren nach einem der Ansprüche 10 bis 13, **dadurch gekennzeichnet, daß** die Parksteuerung Befehle zur Begrenzung der eingespeisten Leistung empfängt.

15. Verfahren nach einem der Ansprüche 10 bis 14, **dadurch gekennzeichnet, daß** die Parksteuerung eine Meßeinrichtung aufweist, die den aktuellen Wert der eingespeisten Wirkleistung mißt, wobei die Parksteuerung den Ist-Wert der Wirkleistung auf den vorgegebenen Leistungswert regelt.

16. Verfahren nach Anspruch 15, **dadurch gekennzeichnet, daß** die Parksteuerung den Windenergieanlagen aus der zweiten Gruppe jeweils den gleichen Sollwert vorgibt.

17. Verfahren nach Anspruch 15, **dadurch gekennzeichnet, daß** die Parksteuerung für mindestens eine der Windenergieanlagen aus der zweiten Gruppe einen von den übrigen Sollwerten abweichenden Sollwert für die Wirkleistung vorgibt.

18. Verfahren nach einem der Ansprüche 10 bis 17, **dadurch gekennzeichnet, daß** die Parksteuerung den vorgegebenen Wert für die Wirkleistung begrenzt bis die Parksteuerung ein Signal empfängt, die Begrenzung aufzuheben.

## Claims

1. Wind park with a plurality of wind energy plants (10, 12, 14), which each comprise one plant control, which presets a desired value for the active power to its wind energy plant, and
with a park control (28), which presets a desired value for the active power to be generated for each plant control and limits the active power fed by the wind park to a preset value, by shutting down a first group (32) of wind energy plants (14) and presetting a desired value for the active power to a second group (34) of wind energy plants (10, 12) at a time, **characterized in that** the park control starts the wind energy plants of the first group again as soon as the sum of the actual values of the active power of the wind energy plants of the second group has reached the preset desired value and/or a predetermined time duration has elapsed, wherein after coupling in again the wind energy plants of the first group, the sum of the active power of the wind energy plants of the first group is increased and the sum of the active power of the wind energy plants of the second group is reduced, such that the sum of the active power of both groups does not or only marginally exceed the preset value.

2. Wind park according to claim 1, **characterized in that** the park control (28) selects the second group such that the actual value of the overall active power fed by the second group is smaller or equal to the preset value for the active power and the number of the wind energy plants in the first group is selected as small as possible.

3. Wind park according to claim 1 or 2, **characterized in that** the park control selects the wind energy plants of the second group such that the sum of the actual values of the active power of these wind energy plants roughly corresponds to the preset value of the active power.

4. Wind park according to any one of claims 1 to 3, **characterized in that** the plant control of each wind energy plant is interconnected with the park control via a data line.

5. Wind park according to any one of claims 1 to 4, **characterized in that** the park control receives commands regarding the desired value of the power to be fed into the grid.

6. Wind park according to any one of claims 1 to 5, **characterized in that** the park control comprises a measuring device which measures the active power fed into the grid.

7. Wind park according to claim 6, **characterized in that** the park control controls the value of the active power fed into the grid.

8. Wind park according to any one of claims 1 to 7, **characterized in that** the park control presets the same desired value for the active power to each one of the wind energy plants of the second group.

9. Wind park according to any one of claims 1 to 7, **characterized in that** the park control presets a desired value for the active power different from the remaining desired values for at least one of the wind energy plants of the second group.

10. Method for the control of the wind park, which comprises a plurality of wind energy plants, the plant control of which presets a desired value for the active power of each wind energy plant at a time, wherein a park control is provided which limits the active power fed by the wind park to a preset value by shutting down a first group of wind energy plants and presetting a desired value for the active power to a second group of wind energy plants at a time, **characterized in that** the park control starts the wind energy plants of the first group again as soon as the sum of the actual values of the active power of the wind energy plants of the second group has reached the preset desired value, wherein after coupling in again the wind energy plants of the first group, the sum of the active power of the wind energy plants of the first group is increased and the sum of the active power of the wind energy plants of the second group is reduced, such that the sum of the active power of both groups does not or only marginally exceed the preset value.

11. Method according to claim 10, **characterized in that** the park control selects the second group such that the actual value of the overall active power fed by the second group is smaller or equal to the preset value for the active power, and the number of the wind energy plants in the first group is selected as small as possible.

12. Method according to claim 10 or 11, **characterized in that** the park control selects the wind energy plants of the second group such that the sum of the actual values of the active power of these wind energy plants roughly corresponds to the preset value of the active power.

13. Method according to claim 10 to 12, **characterized in that** the plant controls of the individual wind energy plants notify their mode of operation and/or their actual value for the active power fed to the park control.

14. Method according to any one of claims 10 to 13, **characterized in that** the park control receives commands regarding the limitation of the power which is fed.

15. Method according to any one of claims 10 to 14, **characterized in that** the park control comprises a measuring device which measures the real value of the active power which is fed, wherein the park control controls the actual value of the active power to the preset power value.

16. Method according to claim 15, **characterized in that** the park control presets the same desired value to each one of the wind energy plants of the second group.

17. Method according to claim 15, **characterized in that** the park control presets a desired value different from the remaining desired values for the active power for at least one of the wind energy plants of the second group.

18. Method according to any one of claims 10 to 17, **characterized in that** the park control limits the preset value for the active power until the park control receives a signal to cancel the limitation.

## Revendications

1. Ferme à vent avec une pluralité d'installations d'énergie éolienne (10, 12, 14), dont chacune a une régulation d'installation qui prescrit à son installation d'énergie éolienne une valeur de consigne pour la puissance effective, et
avec une régulation de ferme (28), qui prescrit à chaque régulation d'installation une valeur de consigne pour la puissance effective à générer et qui limite la puissance effective alimentée par la ferme à vent à une valeur prescrite en désexcitant un premier groupe (32) d'installations d'énergie éolienne (14) et en prescrivant une valeur de consigne pour la puissance effective pour chacune d'un deuxième groupe (34) d'installations d'énergie éolienne (10, 12), **caractérisé en ce que** la régulation de ferme met les installations d'énergie éolienne du premier groupe en marche de nouveau, aussitôt que la somme des valeurs réelles de la puissance effective des installations d'énergie éolienne du deuxième groupe a atteint la valeur de consigne prescrite et/ou une durée prescrite est passée, la somme des puissances effectives des installations d'énergie éolienne du premier groupe étant augmentée et la somme des puissances effectives des installations d'énergie éolienne du deuxième groupe étant réduite après un accouplement des installations d'énergie éolienne du premier groupe de nouveau, de sorte que la somme des puissances effectives des deux groupes ne dépasse pas ou dépasse à minima la valeur prescrite.

2. Ferme à vent selon la revendication 1, **caractérisée en ce que** la régulation de ferme (28) sélectionne le deuxième groupe de sorte que la valeur réelle de la puissance effective alimentée en total du deuxième groupe est plus petite que ou égale à la valeur prescrite pour la puissance réelle, et que le nombre des installations d'énergie éolienne dans le premier groupe est sélectionné aussi petit que possible.

3. Ferme à vent selon la revendication 1 ou 2, **caractérisée en ce que** la régulation de ferme sélectionne les installations d'énergie éolienne du deuxième groupe de sorte que la somme des valeurs réelles de la puissance effective de ces installations d'énergie éolienne correspond à peu près à la valeur prescrite de la puissance effective.

4. Ferme à vent selon l'une quelconque des revendications 1 à 3, **caractérisée en ce que** la régulation d'installation de chaque installation d'énergie éolienne est raccordée à la régulation de ferme à travers un ligne de données.

5. Ferme à vent selon les revendications 1 à 4, **caractérisée en ce que** la régulation de ferme reçoit des commandes par rapport à la valeur de consigne de la puissance à alimenter dans le réseau électrique.

6. Ferme à vent selon l'une quelconque des revendications 1 à 5, **caractérisée en ce que** la régulation de ferme comprend un dispositif mesureur qui mesure la puissance effective alimentée au réseau électrique.

7. Ferme à vent selon la revendication 6, **caractérisée en ce que** la régulation de ferme régule la valeur de la puissance effective alimentée au réseau électrique.

8. Ferme à vent selon l'une quelconque des revendications 1 à 7, **caractérisée en ce que** la régulation de ferme prescrit la même valeur de consigne pour la puissance effective à chacune des installations d'énergie éolienne du deuxième groupe.

9. Ferme à vent selon l'une quelconque des revendications 1 à 7, **caractérisée en ce que** la régulation de ferme prescrit pour au moins une des installations d'énergie éolienne du deuxième groupe une valeur de consigne pour la puissance effective qui est différente des autres valeurs de consigne.

10. Procédé de régulation de la ferme à vent qui a une pluralité d'installations d'énergie éolienne dont la régulation d'installation prescrit une valeur de consigne pour la puissance effective de l'installation d'énergie éolienne, une régulation de ferme étant pourvue qui limite la puissance effective alimentée par la ferme à vent à une valeur prescrite en désexcitant un premier groupe d'installations d'énergie éolienne et en prescrivant une valeur de consigne pour la puissance effective pour chacune d'un deuxième groupe d'installations d'énergie éolienne, **caractérisé en ce que** la régulation de ferme met les installations d'énergie éolienne du premier groupe en marche de nouveau, aussitôt que la somme des valeurs réelles de la puissance effective des installations d'énergie éolienne du deuxième groupe a atteint la valeur de consigne prescrite, la somme des puissances effectives des installations d'énergie éolienne du premier groupe étant augmentée et la somme des puissances effectives des installations d'énergie éolienne du deuxième groupe étant réduite après un accouplement des installations d'énergie éolienne du premier groupe de nouveau, de sorte que la somme des puissances effectives des deux groupes ne dépasse pas ou dépasse à minima la valeur prescrite.

11. Procédé selon la revendication 10, **caractérisé en ce que** la régulation de ferme sélectionne le deuxième groupe de sorte que la valeur réelle de la puissance effective alimentée en total du deuxième groupe est plus petite que ou égale à la valeur prescrite pour la puissance réelle, et que le nombre des installations d'énergie éolienne dans le premier groupe est sélectionné aussi petit que possible.

12. Procédé selon la revendication 10 ou 11, **caractérisé en ce que** la régulation de ferme sélectionne les installations d'énergie éolienne du deuxième groupe de sorte que la somme des valeurs réelles de la puissance effective de ces installations d'énergie éolienne correspond à peu près à la valeur prescrite de la puissance effective.

13. Procédé selon la revendication 10 à 12, **caractérisé en ce que** les régulations d'installation des installations d'énergie éolienne individuelles communiquent à la régulation de ferme leur mode de fonctionnement et/ou leur valeur réelle pour la puissance effective alimentée.

14. Procédé selon l'une quelconque des revendications 10 à 13, **caractérisé en ce que** la régulation de ferme reçoit des commandes afin de limiter la puissance alimentée.

15. Procédé selon l'une quelconque des revendications 10 à 14, **caractérisé en ce que** la régulation de ferme comprend un dispositif mesureur qui mesure la valeur réelle de la puissance effective alimentée, la régulation de ferme régulant la valeur réelle de la puissance effective à la valeur de puissance prescrite.

16. Procédé selon la revendication 15, **caractérisé en ce que** la régulation de ferme prescrit la même valeur de consigne à chacune des installations d'énergie éolienne du deuxième groupe.

17. Procédé selon la revendication 15, **caractérisé en ce que** la régulation de ferme prescrit pour au moins une des installations d'énergie éolienne du deuxième groupe une valeur de consigne pour la puissance effective qui est différente des autres valeurs de consigne.

18. Procédé selon l'une quelconque des revendications 10 à 17, **caractérisé en ce que** la régulation de ferme limite la valeur prescrite pour la puissance effective jusqu'à ce que la régulation de ferme reçoit un signal de mettre fin à la limitation.
